(19)

Europäisches Patentamt

European Patent Office

Office européen des brevets

(11) **EP 4 447 354 A1**

(12) **EUROPEAN PATENT APPLICATION**

(43) Date of publication:
**16.10.2024 Bulletin 2024/42**

(21) Application number: **24152747.2**

(22) Date of filing: **19.01.2024**

(51) International Patent Classification (IPC):
**H04L 1/08** (2006.01)      **H04L 1/00** (2006.01)

(52) Cooperative Patent Classification (CPC):
**H04L 1/08; H04L 1/0025; H04L 1/0072;**
**H04L 1/0061**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.04.2023 GB 202305523**

(71) Applicant: **Nokia Technologies Oy**
**02610 Espoo (FI)**

(72) Inventors:
• **NHAN, Nhat-Quang**
  **Reims (FR)**
• **MASO, Marco**
  **Issy les Moulineaux (FR)**
• **RANTA-AHO, Karri Markus**
  **Espoo (FI)**
• **MARCONE, Alessio**
  **Munich (DE)**

(74) Representative: **Nokia EPO representatives**
**Nokia Technologies Oy**
**Karakaari 7**
**02610 Espoo (FI)**

(54) **METHODS, APPARATUSES AND COMPUTER-READABLE MEDIUMS FOR WIRELESS TRANSMISSION AND SCHEDULING**

(57)     A user equipment includes at least one processor and at least one memory storing instructions. The instructions, when executed by the at least one processor, cause the user equipment to determine a number of repetitions for an uplink transmission granted by a network element in a downlink control information (DCI) message format based on at least one of (i) a first number of bits of a first field in the DCI message, or (ii) a radio network temporary identifier (RNTI) type used to scramble cyclic redundancy check (CRC) bits of the DCI message, and transmit the granted uplink transmission based on the number of repetitions.

FIG. 2

EP 4 447 354 A1

**Description**

TECHNICAL FIELD

One or more example embodiments relate to wireless communications networks.

BACKGROUND

Fifth generation (5G) wireless communications networks are the next generation of mobile communications networks. Standards for 5G communications networks are currently being developed by the Third Generation Partnership Project (3GPP). These standards are known as 3GPP New Radio (NR) standards.

SUMMARY

The scope of protection sought for various example embodiments is set out by the independent claims. The example embodiments and/or features, if any, described in this specification that do not fall under the scope of the independent claims are to be interpreted as examples useful for understanding various embodiments.

One or more example embodiments provide a user equipment including at least one processor and at least one memory storing instructions. The instructions, when executed by the at least one processor, cause the user equipment to determine a number of repetitions for an uplink transmission granted by a network element in a downlink control information (DCI) message based on at least one of (i) a first number of bits of a first field in the DCI message, or (ii) a radio network temporary identifier (RNTI) type used to scramble cyclic redundancy check (CRC) bits of the DCI message, and transmit the granted uplink transmission based on the number of repetitions.

At least one example embodiment provides a device comprising means for determining a number of repetitions for an uplink transmission granted by a network element in a downlink control information (DCI) message based on at least one of (i) a first number of bits of a first field in the DCI message, or (ii) a radio network temporary identifier (RNTI) type used to scramble cyclic redundancy check (CRC) bits of the DCI message, and means for transmitting the granted uplink transmission based on the number of repetitions.

At least one example embodiment provides a method including determining a number of repetitions for an uplink transmission granted by a network element in a downlink control information (DCI) message based on at least one of (i) a first number of bits of a first field in the DCI message, or (ii) a radio network temporary identifier (RNTI) type used to scramble cyclic redundancy check (CRC) bits of the DCI message, and transmitting the granted uplink transmission based on the number of repetitions.

At least one example embodiment provides a non transitory computer readable medium storing computer-executable instructions that, when executed processing circuitry at a user equipment cause the user equipment to perform a method including determining a number of repetitions for an uplink transmission granted by a network element in a downlink control information (DCI) message based on at least one of (i) a first number of bits of a first field in the DCI message or (ii) a radio network temporary identifier (RNTI) type used to scramble cyclic redundancy check (CRC) bits of the DCI message, and transmitting the granted uplink transmission based on the number of repetitions.

One or more example embodiments provide a network element including at least one processor and at least one memory storing instructions. The instructions, when executed by the at least one processor, cause the network element to configure at least one first bit of a first field in a downlink control information (DCI) format, the at least one bit of the first field indicating a number of repetitions for an uplink transmission to be granted by a DCI message, a number of bits included in the at least one first bit being associated with a radio network temporary identifier (RNTI) type, from among a plurality of RNTI types, for scrambling the DCI message; scramble cyclic redundancy check (CRC) bits of the DCI message of the DCI format based on a RNTI having a RNTI type from among the plurality of RNTI types; and grant the uplink transmission using the scrambled DCI message.

At least one example embodiment provides a device comprising means for configuring at least one first bit of a first field in a downlink control information (DCI) format, the at least one bit of the first field indicating a number of repetitions for an uplink transmission to be granted by a DCI message, a number of bits included in the at least one first bit being associated with a radio network temporary identifier (RNTI) type, from among a plurality of RNTI types, for scrambling the DCI message; means for scrambling cyclic redundancy check (CRC) bits of the DCI message of the DCI format based on a RNTI having a RNTI type from among the plurality of RNTI types; and means for granting the uplink transmission using the scrambled DCI message.

At least one example embodiment provides a method including configuring at least one first bit of a first field in a downlink control information (DCI) format, the at least one bit of the first field indicating a number of repetitions for an uplink transmission to be granted by a DCI message, a number of bits included in the at least one first bit being associated with a radio network temporary identifier (RNTI) type, from among a plurality of RNTI types, for scrambling the DCI message; scrambling cyclic redundancy check (CRC) bits of the DCI message of the DCI format based on a RNTI having a RNTI type from among the plurality of RNTI types; and granting the uplink transmission using the scrambled DCI message.

At least one example embodiment provides a non transitory computer readable medium storing computer-executable instructions that, when executed processing circuitry at a user equipment cause the user equipment to perform a method including configuring at least one first bit of a first field in a downlink control information (DCI) format, the at least one bit of the first field indicating a number of repetitions for an uplink transmission to be granted by a DCI message, a number of bits included in the at least one first bit being associated with a radio network temporary identifier (RNTI) type, from among a plurality of RNTI types, for scrambling the DCI message; scrambling cyclic redundancy check (CRC) bits of the DCI message of the DCI format based on a RNTI having a RNTI type from among the plurality of RNTI types; and granting the uplink transmission using the scrambled DCI message.

BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of this disclosure.

 FIG. 1 is a signal flow diagram illustrating messaging between a user equipment (UE) and a network element.
 FIG. 2 illustrates a simplified diagram of a portion of a system including the UE and the network element.
 FIG. 3 is a block diagram illustrating an example embodiment of a UE.
 FIG. 4 is a block diagram illustrating an example embodiment of a Network element.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

It should be understood that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

While one or more example embodiments may be described from the perspective of radio network elements (e.g., gNB), user equipment (UE), or the like, it should be understood that one or more example embodiments discussed herein may be performed by the one or more processors (or processing circuitry) at the applicable device. For example, according to one or more example embodiments, at least one memory may include or store computer program code, and the at least one memory and the computer program code may be configured to, with at least one processor, cause a radio network element (or user equipment) to perform the operations discussed herein.

As discussed herein the terminology "one or more" and "at least one" may be used interchangeably.

As discussed herein, a network element may also be referred to as a gNB, a base station, access point, enhanced NodeB (eNodeB), or more generally, a radio access network element or network node. A UE may also be referred to herein as a mobile station, and may include a mobile phone, a cell phone, a smartphone, a handset, a personal digital assistant (PDA), a tablet, a laptop computer, a phablet, or the like.

It will be appreciated that a number of example embodiments may be used in combination.

Conventionally, during initial access, a UE may request repetition transmission for a transmission of a radio resource control (RRC) request message (Msg3) via a Physical Uplink Shared Channel (PUSCH) , i.e., Msg3 PUSCH, granted by an uplink grant in a random access response (RAR) message (Msg2) for initial transmission of the Msg3 PUSCH or granted by Downlink Control Information (DCI) format 0_0 with Cyclic Redundancy Check (CRC) bits scrambled by Temporary Cell-Radio Network Temporary Identifier (TC-RNTI) for retransmission of the Msg3 PUSCH. The C-RNTI is used to scramble the CRC bits of a DCI payload.

One or more example embodiments provide mechanisms for the UE to determine a number of repetitions for the PUSCH granted by DCI format 0_0 scrambled by RNTIs including, for example, the Cell (C)-RNTI, the Configured Scheduling (CS)-RNTI, and/or the Modulation and Coding Scheme-Cell (MCS-C)-RNTI.

According to at least one example embodiment, a network element (e.g., a gNB) configures a default number of repetitions ($K_{default}$) and at least one number (L) of most significant bits (MSBs) of a modulation and coding scheme (MCS) information field to be used for indicating a number of repetitions for the PUSCH granted by DCI format 0_0 (sometimes referred to herein as DCI format, scheduling DCI format 0_0 message or DCI format 0_0 message) scrambled by one of the above-mentioned RNTIs. In one example, each of the RNTIs may have an associated number of MSBs (e.g., $N_{MSB}^{C-RNTI}$ for C-RNTI, $N_{MSB}^{CS-RNTI}$ for CS-RNTI, and $N_{MSB}^{MCS-C-RNTI}$ for MCS-C-RNTI. Any two or all of the associated numbers of MSBs may be the same or different. Although discussed herein with regard to DCI format 0_0, example embodiments should not be limited to this example.

Once configured, a UE may determine the MSBs (or number (L) of MSBs) of the MCS information field to be used for indicating the number of repetitions based at least on the RNTI type used to scramble the DCI format 0_0. If the DCI format 0_0 is scrambled by C-RNTI/CS-RNTI/MCS-C-RNTI, then the UE determines the number of PUSCH repetitions (K) based on the values of the L number of MSBs, where $L = N_{MSB}$, and $N_{MSB} = N_{MSB}^{C-RNTI}$ or $N_{MSB}^{CS-RNTI}$ or $N_{MSB}^{MCS-C-RNTI}$ depending on the determined RNTI type. According to one or more example embodiments, the UE may determine the RNTI type based on the CRC area (e.g., bits dedicated to CRC) of the DCI payload, which is scrambled in a uniquely identifiable way.

According to one or more example embodiments, alternatively, or additionally, different tables may be configured for indicating the number of repetitions and different tables may be configured for indicating a MCS index, when the scheduling DCI format 0_0 are scrambled by different RNTIs.

Alternatively, or additionally, the UE may use at least 1 MSB from the MCS information field and at least 1 MSB or least significant bit (LSB) from a second field for determining the number of repetitions. The second field may be frequency domain resource assignment (FDRA) and/or a redundancy version field. According to one or more example embodiments, the second field may be FDRA field only when frequency hopping is applied for the granted PUSCH.

Alternatively, or additionally, the number of repetitions may be configured (either using system information broadcast, or UE-specific configuration), and the DCI indication may be used to indicate either to repeat the PUSCH by the configured number of times, or not to repeat.

The determination to repeat or not repeat may be based on the RNTI used. According to one or more example embodiments, a UE may adopt a novel interpretation of the DCI format 0_0 scrambled by a type of RNTI (e.g., C-RNTI, CS-RNTI, MCS-C-RNTI, etc.) whenever the UE requests Msg3 repetition via suitable PRACH resources, the Msg3 repetition request would be interpreted by the network element as a repetition request for any PUSCH granted by DCI format 0_0 after the Msg3 PUSCH (e.g., a RRC setup complete message (Msg5) PUSCH) as well. That is, for example, no dedicated RACH resources are needed for requesting Msg5 repetitions and the same resources configured for Rel-17 Msg3 repetitions request may be used. This may be applied for Msg5 and UE capability reporting messages or PUSCHs that come after the first RRC reconfiguration. Otherwise, UE capability may be known to the network based on the UE capability reporting message.

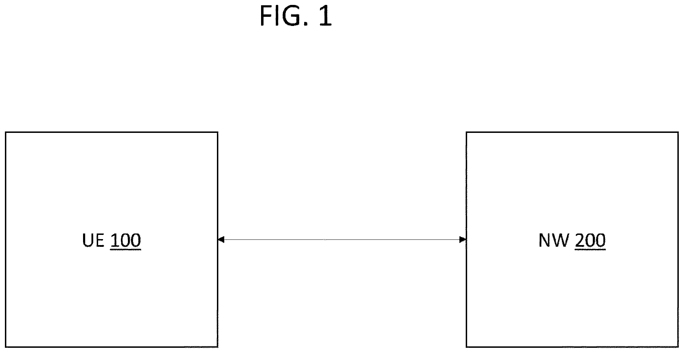

FIG. 1 illustrates a simplified diagram of a portion of a wireless network (e.g., a 5th Generation (5G) wireless communications network) in which example embodiments may be implemented. As shown in FIG. 1, the portion of the network includes a UE 100 and a network element (NW) 200. In one example, the NW 200 provides cellular resources for UEs (e.g., UE 100) within a geographical coverage area. The NW 200 also communicates with a core network (not shown), which is referred to as the New Core in 3GPP NR. For example purposes, example embodiments will be described with regard to the NW 200 being a gNB. However, example embodiments should not be limited to this example. Rather, the NW 200 may represent another network element (e.g., radio access network (RAN) or core network element).

In one example, in addition to the operations described herein, the UE 100 and the NW 200 may communicate according to one or more of the 3GPP New Radio (NR) standards.

Although only a single UE 100 is shown in FIG. 1, example embodiments should not be limited to this example. Rather, the NW 200 may provide wireless communication services to a relatively large number of UEs. For the sake of clarity of example embodiments, communication services (including transmitting and receiving wireless signals) will be discussed as between the NW 200 and the UE 100. It should be understood, however, that signals may be transmitted between the UE 100 and one or more transmission and reception points (TRPs) (not shown) associated with the NW 200.

The UE 100 is configured to communicate with the NW 200 via various communications channels, such as the Physical Downlink Shared Channel (PDSCH)) and the Physical Uplink Shared Channel (PUSCH). Example embodiments should not be limited to this example.

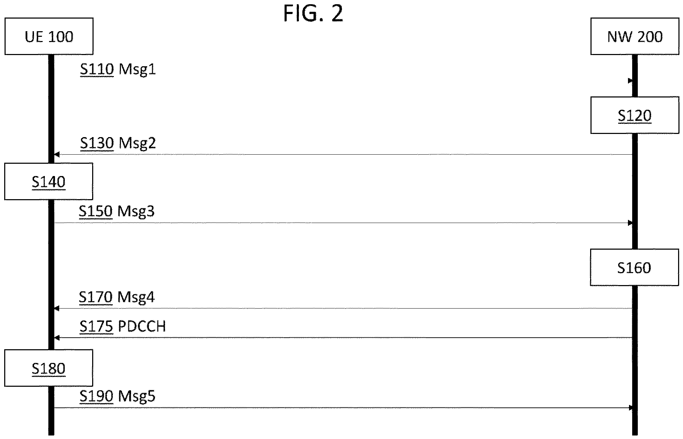

FIG. 2 is a signal flow diagram illustrating a method for PUSCH transmission (also referred to as PUSCH or transmitting PUSCH) according to example embodiments. In more detail, for example, the signal flow diagram in FIG. 2 illustrates example messaging between the UE 100 and the NW 200 for granting transmission on, and then transmitting, the PUSCH transmission.

Referring to FIG. 2, at S110, the UE 100 sends a first message Msg1 to the NW 200. The first message Msg1 includes a preamble sent via physical random-access channel (PRACH) using a random access channel (RACH) occasion (RO). The message Msg1 is a random-access response (RAR) request.

At S120, in response to the first message Msg1, the NW 200 configures a temporary cell (TC)-RNTI and uplink (UL) grant for reception of the PUSCH at the NW 200. The NW 200 may configure the TC-RNTI and the UL grant in any suitable manner.

At S130, the NW 200 sends a second message Msg2 to the UE 100. The second message Msg2 is a RAR message. The multiple access control (MAC) payload for RAR of Msg2 includes the TC-RNTI and an UL grant. The UL grant also includes a modulation and coding scheme (MCS) information field with two most significant bits (MSBs) indicating a number of repetitions of the initial transmission of Msg3 PUSCH transmission for the UE 100 and 2 least significant bits (LSBs) indicating an MCS index to use for the initial Msg3 PUSCH transmission.

At S140, the UE 100 processes the second message Msg2 to obtain Msg3 PUSCH transmission parameters for responding to the second message Msg2. For example, the UE 100 determines the number of repetitions and the MCS index for the Msg3 PUSCH transmission from the MSC information field. The UE 100 also determines the type of RNTI for scrambling the CRC bits of a DCI scheduling a retransmission of Msg3 PUSCH in case the initial transmission of Msg3 PUSCH is not successfully received by the NW 200 and determines the RNTI type as TC-RNTI. The UE 100 also determines the number of repetitions for the initial Msg3 PUSCH transmission by searching a look up table based on the value in the two MSBs of the MCS information field. The look up table may include a value of 1 repetition for MSBs of '00', 2 repetitions for MSBs of '01', 3 repetitions for MSBs of '10,' and 4 repetitions for MSBs of '11.' The UE 100 may also process the second message Msg2 to determine the MCS index by searching a look up table based on the value in the 2 LSBs of the MCS information field. In one example, the MCS index may include values for modulation order Qm, target code rate Rx, and spectral efficiency for the PUSCH transmission.

Still referring to FIG. 2, at S150, the UE 100 transmits an initial transmission of a third message Msg3 to the NW 200 based on the obtained PUSCH transmission parameters. The third message Msg3 includes the PUSCH transmissions according to the parameters determined based on the second message Msg2, including number of repetitions, modulation order Qm, target code rate Rx, and spectral efficiency. The third message Msg3 may be transmitted during uplink timeslots for the UE 100 using PUSCH repetition type A or a similar uplink scheme. In one example, the third message Msg3 is a radio resource control (RRC) setup request..

In the event that the NW 200 cannot successfully decode the initial transmission of Msg3 PUSCH, the NW 200 may grant a retransmission of the Msg3 PUSCH using a downlink control information (DCI). The DCI is in a format 0_0. DCI format 0_0 is a fallback DCI, which has a smaller payload and is more robust and relevant for scheduling uplink transmission before RRC reconfiguration or for being used in coverage shortage scenarios. The DCI includes cyclic redundancy check (CRC) bits which are scrambled by the TC-RNTI.

In the event that the retransmission of Msg3 PUSCH is granted by the NW 200, the UE 100 processes the DCI to obtain Msg3 PUSCH retransmission parameters for responding to the second message Msg2. For example, the UE 100 determines the number of repetitions and the MCS index for the Msg3 PUSCH transmission from the MSC information field in the DCI. The UE 100 also determines the type of RNTI for scrambling the CRC bits of the DCI and determines the RNTI type as TC-RNTI. The UE 100 also determines the number of repetitions for the Msg3 PUSCH retransmission by searching a look up table based on the value in the two MSBs of the MCS information field in the DCI. The look up table may include a value of 1 repetition for MSBs of '00', 2 repetitions for MSBs of '01', 3 repetitions for MSBs of '10,' and 4 repetitions for MSBs of '11.' The UE 100 may also process the DCI to determine the MCS index by searching a look up table based on the value in the 3 LSBs of the MCS information field. In one example, the MCS index may include values for modulation order Qm, target code rate Rx, and spectral efficiency for the PUSCH transmission. Other parameters for the PUSCH transmission may also be determined by the UE 100 by processing the DCI, such as redundancy version.

At S160, the NW 200 configures a further RNTI (also referred to herein as a new RNTI) for further communications with the UE 100 and determines further PUSCH transmission parameters for further PUSCH transmissions. The new RNTI may be one of TC-RNTI, a cell-RNTI (C-RNTI), a configured scheduling-RNTI (CS-RNTI), or a modulation and coding scheme-cell-RNTI (MCS-C-RNTI).

The TC-RNTI is generally used for scheduling PUSCH resources for third message Msg3 retransmission and is also used for scheduling PDSCH resources for a fourth message Msg4 (discussed below).

The C-RNTI is generally used for scheduling PDSCH or PUSCH resources with a UE such as UE 100.

The CS-RNTI is generally used to activate or deactivate a configured grant transmission in the uplink (UL) or semi-persistent scheduling in the downlink (DL). The CS-RNTI may also be used when scheduling retransmission of configured grant or semi-persistent scheduling.

The MCS-C-RNTI may be used to switch between MCS tables applied to the granted PUSCH or PDSCH.

Also at S160, the NW 200 determines values for bits in the MCS information field by determining the number of MSB to be used for indicating the number of repetitions of the PUSCH transmission and determining the number of LSB to be used for indicating the MCS index and applying values to the MSB and LSB based on desired specifications for the PUSCH transmission. Both the number of MSB and LSB may be determined by the type of RNTI. Restated, each type of RNTI have a number of MSB and LSB associated with communication via the RNTI type. The NW 200 determines the number of repetitions for the PUSCH transmission and the MCS index to be used for the PUSCH transmission. The NW 200 may also determine other parameters for the PUSCH transmission including redundancy version and frequency domain resource assignment (FDRA). The NW 200 may also select an RNTI type to utilize in scrambling the DCI format 0_0 based on network conditions, such as signal strength and availability, and requests from the UE 100, such as repetition requests.

In one example embodiment, the NW 200 may configure communication for the C-RNTI and determine an implicit request for PUSCH repetition from a PUSCH repetition request for the third message Msg3. In this case, the NW 200 configures the value of the MSB of the MCS information field to indicate a largest number of repetitions.

In an example embodiment, the NW 200 configures communication for C-RNTI upon receipt of a repetition request.

In an example embodiment, the NW 200 may not grant a repetition request (e.g., does not configure the value of the MSB of the MCS information field to indicate a largest number of repetitions) based on network conditions.

Still referring to FIG. 2, at S170, the NW 200 grants, using a scheduling DCI of format 1_0 scrambled by the TC-RNTI, a PDSCH transmission for transmitting a fourth (RRC setup) message (Msg 4) to the UE 100..

At S175, the NW 200 sends a physical downlink control channel (PDCCH) that conveys a DCI of format 0_0 with CRC bits scrambled by the new RNTI for scheduling a PUSCH transmission that comes after Msg4 (e.g., a RRC setup complete message (Msg5)).

At S180, the UE 100 determines the PUSCH transmission to be scheduled and parameters for the PUSCH transmission based on the DCI at S175 from the NW 200.. In determining the parameters for the PUSCH transmission, the UE 100 determines which bits of the MCS information field are the MSBs and the LSBs based on the scrambled CRC bits of the DCI. More specifically, for example, the UE 100 may determine the RNTI type based on the scrambled CRC bits and the MSBs and LSBs of the MCS information field may be determined based on known values (e.g., stored at the UE 100) associated with the determined RNTI type. The UE 100 then uses the MSB to determine the number of repetitions of the PUSCH transmission by searching a look up table specific to the RNTI type based on the value of the MSB. Similarly, the MCS index for the PUSCH transmission is determined by searching a look up table specific to the RNTI type based on the value of the LSB. Each RNTI type may have a separate associated look up table for each of the number of repetitions and the MCS index as well as other values indicated in the DCI. For example, even if TC-RNTI and CS-RNTI both include 3 LSBs in the MCS information field for determining the MCS index, the look up tables for TC-RNTI and CS-RNTI may be separate and/or unique. This is also the case for each of the RNTI types.

According to one or more example embodiments, a look up table with relatively low spectral efficiency may be used if the CRC of the DCI is scrambled by MCS-C-RNTI and a look up table with relatively high spectral efficiency may be used if the CRC of the DCI is scrambled by C-RNTI. In this way, the NW 200 may have twice the options for spectral efficiency for granting PUSCH transmissions by selecting the RNTI type.

Each of the RNTI types may have the same or a different number of associated MSBs and/or LSBs in the MCS information field. However, the number of bits in the MCS information field may be constant such that the length of the DCI format 0_0 message is constant across all RNTI types. For example, for TC-RNTI the number of MSBs may be 2 and the number of LSBs may be 3, whereas for C-RNTI the number of MSBs may be 3 and the number of LSBs may be 2. Some RNTI types may have the same number of MSBs and LSBs in the MCS information field. For example, in one example embodiment the MSBs and LSBs for TC-RNTI and CS-RNTI may be the same. The number of bits included in MSBs and LSBs for each RNTI type may be preprogrammed, stored, or otherwise known by the UE 100 and the NW 200. Alternatively, the number of bits included in MSBs and LSBs for each RNTI type may be communicated via a separate communication (i.e., not a scheduling DCI message) from the NW 200 to the UE 100.

In one example embodiment, a set number of repetitions may be established by the NW 200 and communicated to the UE 100 via separate transmission. In this case, the MSB may be a single bit for one or more of the RNTI types, wherein if the single MSB has a value indicating to use the set number of repetitions (e.g., '1'), the UE 100 determines the number of repetitions for the PUSCH transmission to be the set number of repetitions. On the other hand, if the single MSB has a value indicating not to use the set number of repetitions (e.g., '0'), then the UE 100 determines the number of repetitions for the PUSCH transmission to be 1 (i.e., no repetitions). If the set number of repetitions is not defined in this example, then the UE 100 may use the same number of repetitions used for the third message Msg3 or another previous PUSCH transmission.

In another example, the MSB may be a single bit for at least one RNTI type and two values of repetitions may be established. In this case, if the single MSB has a value of '1', for example, then the UE 100 determines that the number of repetitions for the PUSCH transmission is a first set number of repetitions. If the single MSB has a value of '0', for example, then the UE 100 determines that the number of repetitions for the PUSCH transmission is a second set number of repetitions.

According to example embodiments, for some of the RNTI types the number of MSBs of the MCS information field may be zero. In this case, a set (or default) number of repetitions may be used by the UE 100 for the RNTI type. The set number of repetitions may be communicated from the NW 200 to the UE 100. If no set number of repetitions is defined at the UE 100, then the UE 100 may determine no repetitions should be used.

According to example embodiments, at least one bit in the DCI, outside of the MCS information field, may indicate the number of repetitions for the PUSCH transmission. For example, one bit of the MCS information field and one bit of the redundancy version field may be used to indicate the number of repetitions. The two bits may be combined and used with a look up table as discussed above with relation to two bits from the MCS information field being used to determine the number of repetitions. The redundancy version field generally includes two bits for indicating a redundancy version as any of RV0-RV3 (each of RV0-RV3 indicating a redundancy version for a first repetition of the PUSCH transmission, i.e., where to start taking the encoded bits in circular buffer for mapping to a first repetition of the PUSCH transmission will occur in a redundancy version cycle). Redundancy versions RV0 and RV3 are self-decodable redundancy versions, which is more robust, and DCI format 0_0 may be used where there is not a stable connection and/or there is a coverage shortage. Therefore, in the case where one bit is repurposed to indicate the number of repetitions of the PUSCH transmission, the single remaining bit of redundancy version is used to indicate a redundancy version between RV0 and RV3.

In another example, when frequency hopping is enabled, a bit from the FDRA field may be used along with the bit from the MCS information field to indicate the number of repetitions. Generally, when frequency hopping is enabled, 2 bits from the FDRA field may be used to indicate a frequency hopping offset (e.g., each of the four possible values indicating one of 4 frequency hopping values). In this example, one of the bits indicating the frequency hopping offset is repurposed for indicating the number of repetitions and the other bit is used for indicating between two frequency hopping offsets.

In another example embodiment, for at least one RNTI type the MSB for indicating repetitions in the MCS information field is set to zero and one bit from redundancy version field and one bit from the FDRA field (when frequency hopping is enabled) may be used to indicate the number of repetitions of the PUSCH transmission. In this case, the LSB indicating the MCS index may be all 5 of the MCS information field bits.

Still referring to S180 in FIG. 2, in yet another example embodiment, the UE 100 determines the number of MSBs and LSBs of the MCS information field based on the RNTI type used to scramble the DCI format 0_0 and whether the DCI format 0_0 message grants a PUSCH transmission that comes after the first RRC reconfiguration. In this example, if the DCI format 0_0 message grants a PUSCH transmission that comes after the first RRC reconfiguration, then the number of MSBs and LSBs of the MCS information field may be set as discussed above. On the other hand, if the DCI format 0_0 message grants a PUSCH transmission before the first RRC reconfiguration, then the number of MSBs, for example, may be set to a default value (e.g., 2), which may be configured via another parameter or by a hard coded value.

According to one or more example embodiments, the number of repetitions for each RNTI type may be stored in the UE 100. The UE 100 may acquire the number of repetitions for each RNTI type via system information broadcast or UE-specific configuration. The scheduling DCI format 0_0 message may include one bit indicating whether to repeat the PUSCH transmission the configured number of times, or not repeat.

More generally, for each RNTI type, bits in the scheduling DCI format 0_0 message may be repurposed to indicate a number of repetitions for a PUSCH transmission. The number of bits used for various fields, such as MCS index, FDRA, redundancy version as well as other fields may be changed for different RNTI types. The changes may be programmed into or stored in the NW 200 and UE 100 such that the changes in bit allocation are known to both the NW 200 and UE 100 for each RNTI type.

Returning to FIG. 2, at S190, the UE 100 may send a PUSCH transmission scheduled by the DCI at S175 to the NW 200. The PUSCH transmission may be a fifth message Msg5 or any PUSCH transmission that is scheduled after Msg4 by the DCI. The PUSCH transmission may be transmitted with the number of repetitions determined from the MSBs of the MCS information field of the DCI and the parameters determined from the modulation order Qm, target code rate Rx, and spectral efficiency for the PUSCH transmission from the MCS index indicated by the LSBs of the MCS information field of fourth message Msg4.

Conventionally, repetition is not supported for PUSCH transmission granted by DCI format 0_0 scrambled by C-RNTI. An issue with supporting repetition for PUSCH transmission scheduled by DCI format 0_0 scrambled by C-RNTI is that the payload information of the PUSCH transmission is often greater than that of Msg3 PUSCH, therefore more alternatives for the selection of MCS index may be needed.. In the above example embodiments, the MCS indices in the look up table may be increased such that the NW 200 may grant a sufficient MCS according to the payload and the channel condition

The above example embodiments may also provide improvements in the number of varieties of MCS specifications the NW 200 may request from the UE 100 in PUSCH transmissions, thus improving the utility of PUSCH transmissions and/or improving the ability of UE 100 and NW 200 to communicate.

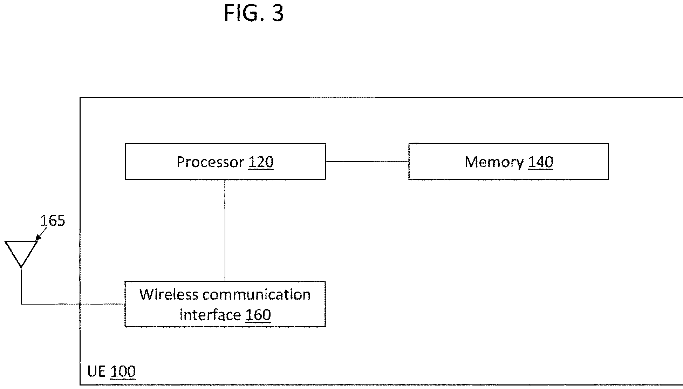

FIG. 3 is a block diagram illustrating an example embodiment of a UE. As shown, the UE 100 includes: a memory 140; a processor 120 connected to the memory 140; wireless communication interfaces 160 connected to the processor 120; and one or more (e.g., a plurality of) antennas or antenna panels 165 connected to the wireless communication interfaces 160. The various interfaces 160 and the antenna 165 may constitute a transceiver for transmitting/receiving data from/to the gNB via one or more wireless beams or from/to the plurality of TRPs.

The memory 140 may be a computer readable storage medium that generally includes a random access memory (RAM), read only memory (ROM), and/or a permanent mass storage device, such as a disk drive. The memory 140 also stores an operating system and any other routines/modules/applications for providing the functionalities of the UE 100 (e.g., functionalities of a UE, methods according to the example embodiments, etc.) to be executed by the processor 120. These software components may also be loaded from a separate computer readable storage medium into the memory 140 using a drive mechanism (not shown). Such separate computer readable storage medium may include a disc, tape, DVD/CD-ROM drive, memory card, or other like computer readable storage medium (not shown). In some example embodiments, software components may be loaded into the memory 140 via one of the various interfaces 160, rather than via a computer readable storage medium.

The processor 120 may be configured to carry out instructions of a computer program by performing the arithmetical, logical, and input/ output operations of the system. Instructions may be provided to the processor 120 by the memory 140.

The various interfaces 160 may include components that interface the processor 120 with the antenna 165, or other input/output components. As will be understood, the various interfaces 160 and programs stored in the memory 140 to set forth the special purpose functionalities of the UE 100 will vary depending on the implementation of the UE 100.

The interfaces 160 may also include one or more user input devices (e.g., a keyboard, a keypad, a mouse, or the like) and user output devices (e.g., a display, a speaker, or the like).

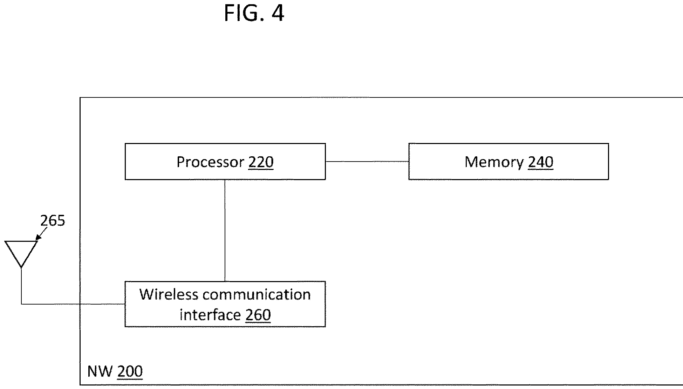

FIG. 4 is a block diagram illustrating an example embodiment of a Network element NW 200. As shown, the NW 200 includes: a memory 240; a processor 220 connected to the memory 240; various interfaces 260 connected to the processor 220; and one or more (e.g., a plurality of) antennas or antenna panels 265 connected to the wireless communication interfaces 160. The wireless communication interfaces 260 and the antenna 265 may constitute a transceiver for transmitting/receiving data from/to the UE 100 via one or more wireless beams or other wireless communications. As will be appreciated, depending on the implementation of the NW 200, the NW 200 may include many more components than those shown in FIG. 4. However, it is not necessary that all of these generally conventional components be shown in order to disclose the illustrative example embodiment.

The memory 240 may be a computer readable storage medium that generally includes a random access memory (RAM), read only memory (ROM), and/or a permanent mass storage device, such as a disk drive. The memory 240 also stores an operating system and any other routines/modules/applications for providing the functionalities of the NW 200 (e.g., functionalities of a UE, methods according to the example embodiments, etc.) to be executed by the processor 220. These software components may also be loaded from a separate computer readable storage medium into the memory 240 using a drive mechanism (not shown). Such separate computer readable storage medium may include a disc, tape, DVD/CD-ROM drive, memory card, or other like computer readable storage medium (not shown). In some example embodiments, software components may be loaded into the memory 240 via one of the various interfaces 260, rather than via a computer readable storage medium.

The processor 220 may be configured to carry out instructions of a computer program by performing the arithmetical, logical, and input/ output operations of the system. Instructions may be provided to the processor 220 by the memory 240.

The various interfaces 260 may include components that interface the processor 220 with the antenna 265, or other input/output components. As will be understood, the wireless communication interfaces 260 and programs stored in the memory 240 to set forth the special purpose functionalities of the NW 200 will vary depending on the implementation of the NW 200.

The UE 100 and NW 200 may also include various interfaces such as one or more user input devices (e.g., a keyboard, a keypad, a mouse, or the like) and user output devices (e.g., a display, a speaker, or the like).

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/ acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing user equipment, base stations, eNBs, RRHs, gNBs, femto base stations, network controllers, computers, or the like. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be rearranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, user equipment, base stations, eNBs, RRHs, gNBs, femto base stations, network controllers, computers, or the like, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

**Claims**

1. A user equipment comprising:

    at least one processor; and
    at least one memory storing instructions that, when executed by the at least one processor, cause the user equipment to

        determine a number of repetitions for an uplink transmission granted by a network element in a downlink control information (DCI) message based on at least one of

            (i) a first number of bits of a first field in the DCI message,
            (ii) whether the DCI message is received after a radio resource control (RRC) reconfiguration, or

            (iii) a radio network temporary identifier (RNTI) type used to scramble cyclic redundancy check (CRC) bits of the DCI message, and

        transmit the granted uplink transmission based on the number of repetitions.

2. The user equipment of claim 1, wherein the RNTI type is one of a cell-RNTI (C-RNTI), a configured scheduling-(CS-RNTI), or a MCS-cell-RNTI (MCS-C-RNTI) and the DCI format is a fallback DCI format 0_0.

3. The user equipment of claim 2, wherein

    each of the C-RNTI, the CS-RNTI, or the MCS-C-RNTI is associated with a respective value representing the bit-width of the first number of bits of the first field; and
    the at least one memory stores instructions that, when executed by the at least one processor, cause the user equipment to determine the first number of bits of the first field based on the RNTI type by

        determining which of the C-RNTI, the CS-RNTI, or the MCS-C-RNTI is used to scramble the CRC bits, and
        determining the first number of bits as the respective value associated with the RNTI type used to scramble the CRC bits.

4. The user equipment of claim 3, wherein the at least one memory stores instructions that, when executed by the at least one processor, cause the user equipment to determine the number of repetitions based on the first number of bits of the first field in the DCI message by
determining the number of repetitions for the granted uplink transmission based on a value represented by the first number of bits of the first field in the DCI message.

5. The user equipment of claim 4, wherein the at least one memory stores instructions that, when executed by the at least one processor, cause the user equipment to determine the number of repetitions for the granted uplink transmission based on the value represented in the first number of bits of the first field in the DCI message and a look up table.

6. The user equipment of claim 5, wherein the look up table is one of a plurality of look up tables, wherein each of the plurality of look up tables is associated with a respective one of a plurality of RNTI types.

7. The user equipment of any of claims 1-6, wherein the first field is a modulation and coding scheme (MCS) information field and the first number of bits are most significant bits of the MCS information field.

8. The user equipment of any of claims 1-7, wherein the first field is a redundancy version (RV) field and the first number of bits are most significant bits or least significant bits of the RV field.

9. The user equipment of any of claims 1-7, wherein the first field to be a frequency domain resource assignment (FDRA) field when frequency hopping is applied for the uplink transmission and the first number of bits are most significant bits of the FDRA field.

10. The user equipment of claim 1, wherein

the first number of bits of the first field is 1;
the bits of the first field indicate whether to use a default number of repetitions as the number of repetitions for the granted uplink transmission.

11. The user equipment of claim 10, wherein in response to the default number of repetitions not being set, the at least one memory stores instructions that, when executed by the at least one processor, cause the user equipment to
determine the number of repetitions to be a previous number of repetitions for a previously granted uplink transmission.

12. The user equipment of claim 1, wherein the at least one memory stores instructions that, when executed by the at least one processor, cause the user equipment to determine the number of repetitions based on the first number of bits of the first field in the DCI message and a second number of bits of a second field in the DCI message.

13. The user equipment of claim 12, wherein the second number of bits is based on the RNTI type used to scramble the CRC bits of the DCI message.

14. The user equipment of claim 12, wherein the at least one memory stores instructions that, when executed by the at least one processor, cause the user equipment to determine the number of repetitions for the granted uplink transmission based on a first value represented in the first number of bits of the first field in the DCI message and a second value represented in the second number of bits of the second field in the DCI message.

15. A method comprising:

determining, by a user equipment, a number of repetitions for an uplink transmission granted by a network element in a downlink control information (DCI) message using a DCI format based on at least one of (i) a first number of bits of a first field in the DCI message or (ii) a radio network temporary identifier (RNTI) type used to scramble cyclic redundancy check (CRC) bits of the DCI message, and
transmitting, by the user equipment, the granted uplink transmission based on the number of repetitions.

# FIG. 1

UE 100 ←→ NW 200

FIG. 2

FIG. 3

FIG. 4

```
                  ┌──────────────────────┐        ┌──────────────────────┐
                  │   Processor 220      │────────│   Memory 240         │
                  └──────────┬───────────┘        └──────────────────────┘
        265                  │
         ▽                   │
                  ┌──────────┴───────────┐
                  │ Wireless communication│
                  │   interface 260       │
                  └──────────────────────┘

    NW 200
```

## EUROPEAN SEARCH REPORT

Application Number

EP 24 15 2747

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/159682 A1 (LIU LIQING [JP] ET AL) 19 May 2022 (2022-05-19) * paragraph [0257] * | 1-6, 12-15 | INV. H04L1/08 H04L1/00 |
| X | US 11 224 059 B2 (FG INNOVATION CO LTD [HK]) 11 January 2022 (2022-01-11) * column 22, lines 23-26 * * column 27, lines 26-30 * | 1,7-9, 12-15 | |
| X | WO 2023/272675 A1 (QUALCOMM INC [US]; LY HUNG DINH [US] ET AL.) 5 January 2023 (2023-01-05) * paragraphs [0082], [0087] * | 1-6, 10-15 | |

TECHNICAL FIELDS
SEARCHED      (IPC)

H04L

The present search report has been drawn up for all claims

| Place of search | Date of completion of the search | Examiner |
|---|---|---|
| The Hague | 5 June 2024 | Marjanovic, Djordje |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2747

This annex lists the patent family members relating to the patent documents cited in  the above-mentioned European search report.
The members are as contained in the European Patent Office EDP file on
The European Patent Office is in no way liable for these particulars which are merely given for the purpose of information.

05-06-2024

| Patent document cited in search report | | Publication date | Patent family member(s) | | Publication date |
|---|---|---|---|---|---|
| US 2022159682 | A1 | 19-05-2022 | CN | 113366903 A | 07-09-2021 |
| | | | EP | 3911074 A1 | 17-11-2021 |
| | | | JP | 7287787 B2 | 06-06-2023 |
| | | | JP | 2020113882 A | 27-07-2020 |
| | | | US | 2022159682 A1 | 19-05-2022 |
| | | | WO | 2020145368 A1 | 16-07-2020 |
| US 11224059 | B2 | 11-01-2022 | CN | 114128337 A | 01-03-2022 |
| | | | EP | 3954147 A1 | 16-02-2022 |
| | | | EP | 4167616 A1 | 19-04-2023 |
| | | | JP | 7262657 B2 | 21-04-2023 |
| | | | JP | 2022540257 A | 14-09-2022 |
| | | | KR | 20220044963 A | 12-04-2022 |
| | | | PT | 3954147 T | 01-03-2023 |
| | | | US | 2021022158 A1 | 21-01-2021 |
| | | | US | 2022086876 A1 | 17-03-2022 |
| | | | WO | 2021008558 A1 | 21-01-2021 |
| WO 2023272675 | A1 | 05-01-2023 | CN | 117678316 A | 08-03-2024 |
| | | | EP | 4364515 A1 | 08-05-2024 |
| | | | WO | 2023272675 A1 | 05-01-2023 |

EPO FORM P0459

For more details about this annex : see Official Journal of the European Patent Office, No. 12/82